# EUROPÄISCHE PATENTSCHRIFT

(11) **EP 2 603 407 B1**
(45) Veröffentlichungstag und Bekanntmachung des Hinweises auf die Patenterteilung: **05.04.2017**
(21) Anmeldenummer: 11751835.7
(22) Anmeldetag: 11.07.2011
(51) Int. Cl.: B60T 7/12, B60T 8/171, B60T 8/172, B60T 8/175, B60T 8/1769, B60T 8/26, B60T 8/32, B60T 8/34, B60T 13/66, B60W 10/18

(54) **TRAKTIONSHILFE-FUNKTION FÜR FAHRZEUGE MIT MEHREREN ANGETRIEBENEN ACHSEN**
TRACTION AID FUNCTION FOR VEHICLES HAVING A PLURALITY OF DRIVEN AXLES
FONCTION D'AIDE À LA TRACTION POUR DES VÉHICULES ÉQUIPÉS DE PLUSIEURS ESSIEUX ENTRAÎNÉS

(30) Priorität: 11.08.2010 DE 102010039174
(43) Veröffentlichungstag der Anmeldung: 19.06.2013
(73) Patentinhaber: Robert Bosch GmbH, 70442 Stuttgart (DE)
(72) Erfinder: BIENIEK, Lars, 74670 Forchtenberg (DE); DIETERICH, Frank, 74232 Abstatt (DE); SCHMIDT, Michael Frank, 71634 Ludwigsburg (DE)
(86) Internationale Anmeldenummer: PCT/EP2011/061744
(87) Internationale Veröffentlichungsnummer: WO 2012/019842

(56) Entgegenhaltungen:
- EP-A1- 1 826 082
- EP-A2- 0 755 821
- WO-A1-01/28802
- DE-A1- 3 527 959
- DE-A1- 10 050 173
- DE-A1- 19 953 773
- DE-A1-102009 005 378
- FR-A1- 2 843 079

## Beschreibung

### Stand der Technik

Die Erfindung betrifft ein Verfahren zum Übertragen des Antriebsmoments von Rädern mit einer geringeren Traktion auf solche Räder mit einer höheren Traktion, sowie eine Vorrichtung, die eine automatische Traktionshilfe-Funktion für Fahrzeuge realisiert.

Ein derartiges Verfahren ist aus der De 100 50 173 A1 benannt. Bei Kraftfahrzeugen wird das Motormoment über den Antriebsstrang auf die angetriebenen Rädern übertragen, wodurch an den Rädern ein bestimmtes Antriebsmoment wirkt. Bei einem ausreichend hohem Fahrbahnreibwert und ausreichend hoher Radaufstandskraft wird das Antriebsmoment in eine Fahrzeugbeschleunigung umgesetzt. Wenn jedoch das Antriebsmoment im Verhältnis zum Reibwert zu hoch ist, tritt an dem betreffenden Rad ein Antriebsschlupf auf und das Rad dreht durch. Im ungünstigsten Fall kann es vorkommen, dass das Fahrzeug sehr langsam oder gar nicht beschleunigt.
In der Vergangenheit wurden daher Traktionshilfe-Funktionen, wie zum Beispiel ABD (automatisches Bremsdifferential) entwickelt, die das Anfahren und Beschleunigen von Fahrzeugen unterstützen. Eine bekannte Ausführungsform einer solchen Traktionshilfe-Funktion umfasst beispielsweise eine Hydraulikeinheit, die bei einem Anfahrvorgang an einem oder mehreren schlupfbehafteten Rädern automatisch Bremsdruck aufbaut, um das Antriebsmoment von dem beziehungsweise den schlupfbehafteten Rädern auf wenigstens ein anderes Rad zu übertragen, das ein höheres Antriebsmoment absetzen kann. Dadurch ist das Anfahren und Beschleunigen auf stark unterschiedlichen Reibwerten, zum Beispiel Schnee/Eis auf der einen Fahrzeugseite und Asphalt auf der anderen Fahrzeugseite, möglich.

Bekannte Anfahrhilfe-Systeme benötigen allerdings Informationen über die Raddrehzahl jedes einzelnen Rades. Das Fahrzeug muss also mit Rad-Drehzahlsensoren für jedes einzelne Rad ausgestattet sein. Dies ist relativ aufwendig und teuer, insbesondere bei Fahrzeugen mit mehr als zwei Achsen.

### Offenbarung der Erfindung

Es ist daher Aufgabe der vorliegenden Erfindung, eine automatische Traktionshilfe für Fahrzeuge zu schaffen, mit der das Antriebsmoment eines Rades mit geringer Traktion auf ein Rad mit einer höheren Traktion übertragen werden kann, wobei die erfindungsgemäße Traktionshilfe nur von einigen, aber nicht von allen Rädern eine Drehzahlinformation benötigt.

Gelöst wird diese Aufgabe gemäß der Erfindung durch die im Patentanspruch 1 sowie im Patentanspruch 6 angegebenen Merkmale. Weitere Ausgestaltungen der Erfindung sind Gegenstand von Unteransprüchen.

Gemäß der Erfindung wird vorgeschlagen, die Drehzahl einer Kardanwelle zu messen und diese in Relation zur Rad-Drehzahl wenigstens eines Rades zu setzen, das mit einem Drehzahlsensor ausgestattet ist. Wenn die Abweichung zwischen der Kardanwellen-Drehzahl und der Referenz-Drehzahl zu hoch ist, ist dies ein Hinweis darauf, dass ein anderes von der Kardanwelle angetriebenes Rad, das keinen Drehzahlsensor hat, Schlupf aufweist. In diesem Fall wird wenigstens ein von der Kardanwelle angetriebenes Rad ohne Drehzahlsensor automatisch gebremst. Dadurch wird das Antriebsmoment von diesem Rad auf ein anderes Rad mit höherer Traktion übertragen, so dass das Fahrzeug anfährt und / oder besser beschleunigt. Durch eine Auswertung der Kardanwellen-Drehzahl ist es somit möglich, eine Traktionshilfe auch für Fahrzeuge zu realisieren, bei denen nicht alle Räder mit Rad-Drehzahlsensoren ausgestattet sind.

Gemäß der Erfindung wird unter der Bezeichnung "Drehzahl der Kardanwelle" auch jede andere Drehzahl beziehungsweise proportionale Größe im Antriebsstrang des Fahrzeugs verstanden, die proportional zur Kardanwellen-Drehzahl ist.

Die Erfindung wird im Folgenden anhand zweier Beispiele erläutert.

### Beispiel 1:

Ein Fahrzeug, das mehrere angetriebene Achsen aufweist, befindet sich im Stillstand. Der Fahrer betätigt das Fahrpedal, um das Fahrzeug aus dem Stand heraus zu beschleunigen. An den Rädern einer angetriebenen Achse, wie zum Beispiel der Vorderachse, wird eine Drehzahl von etwa Null gemessen. Die Kardanwellen-Drehzahl ist dagegen größer als Null. Dies bedeutet, dass die Räder einer angetriebenen Hinterachse Antriebsschlupf aufweisen. Dies kann allein aufgrund der niedrigen Korrelation zwischen den Drehzahlen der Vorderräder und der Kardanwelle erkannt werden, ohne dass hierzu Rad-Drehzahlsensoren an den Hinterrädern erforderlich wären. In diesem Fall werden die Räder einer angetriebenen Hinterachse automatisch gebremst, die keine Rad-Drehzahlsensoren aufweisen.

### Beispiel 2:

Ein Fahrzeug, das zwei angetriebene Hinterachsen aufweist, befindet sich im Stillstand. Der Fahrer betätigt das Fahrpedal, um das Fahrzeug aus dem Stand heraus zu beschleunigen. Von den Hinterrädern sind nur die Räder einer Achse mit Rad-Drehzahlsensoren bestückt; die anderen Hinterräder haben keine Rad-Drehzahlsensoren. Die Drehzahlsensoren der Hinterräder liefern einen bestimmten Drehzahlwert n1. Die Drehzahl der Kardanwelle ist in Relation zur Rad-Drehzahl zu hoch, wobei die Differenz zwischen der Rad-Drehzahl und der Kardanwellen-Drehzahl einen vorgegebenen Schwellenwert überschreitet. Dies ist ein Hinweis darauf, dass die Räder der zweiten Hinterachse Schlupf aufweisen. In diesem Fall wird wenigstens ein Rad der zweiten angetriebenen Hinterachse, das keinen Drehzahlsensor aufweist, automatisch gebremst und somit das Antriebsmoment auf ein anderes Rad mit höherer Traktion übertragen. Das erfindungsgemäße Verfahren findet vorzugsweise Anwendung bei Fahrzeugen mit mehreren Hinterachsen, von denen wenigstens ein Rad keinen Drehzahlsensor aufweist.

Gemäß einer ersten Ausführungsform der Erfindung haben sämtliche Räder einer angetriebenen Achse keine Drehzahlsensoren. Gemäß einer zweiten Ausführungsform der Erfindung hat zumindest ein Rad einer angetriebenen Achse keinen Drehzahlsensor, während wenigstens ein anderes Rad der Achse einen Drehzahlsensor aufweist.

Sofern das Fahrzeug eine oder mehrere angetriebene Achsen aufweist, deren Räder sämtlich keinen Drehzahlsensor aufweisen, werden vorzugsweise alle Räder dieser Achse(n) gebremst.

Sofern das Fahrzeug mehrere angetriebene Achsen hat, die jeweils wenigstens ein Rad ohne Drehzahlsensor aufweisen, werden vorzugsweise alle Räder dieser Achsen automatisch gebremst.

Ein automatisches Anfahrhilfe-System für Kraftfahrzeuge mit mehreren angetriebenen Achsen, bei denen nicht alle angetriebenen Räder mit Rad-Drehzahlsensoren ausgestattet sind, umfasst entsprechend ein Steuergerät, das eine Drehzahl einer Kardanwelle in Relation zu einer gemessenen Rad-Drehzahl setzt und das an wenigstens einem Rad ohne Drehzahlsensor einen automatischen Bremseingriff auslöst, wenn die Kardanwellen-Drehzahl im Verhältnis zur Rad-Drehzahl zu hoch ist. Das erfindungsgemäße Steuergerät umfasst hierzu einen entsprechenden Auswerte- und Regelalgorithmus.

Die Erfindung wird nachstehend anhand der beigefügten Zeichnungen beispielhaft näher erläutert. Es zeigen:
- Fig. 1: eine schematische Darstellung eines dreiachsigen Fahrzeugs mit drei angetriebenen Achsen, bei dem die Räder einer Hinterachse keine Drehzahlfühler aufweisen; und
- Fig. 2: eine schematische Ansicht eines dreiachsigen Fahrzeugs mit drei angetriebenen Achsen, bei dem jeweils ein Rad der Hinterachsen keinen Drehzahlfühler aufweist.

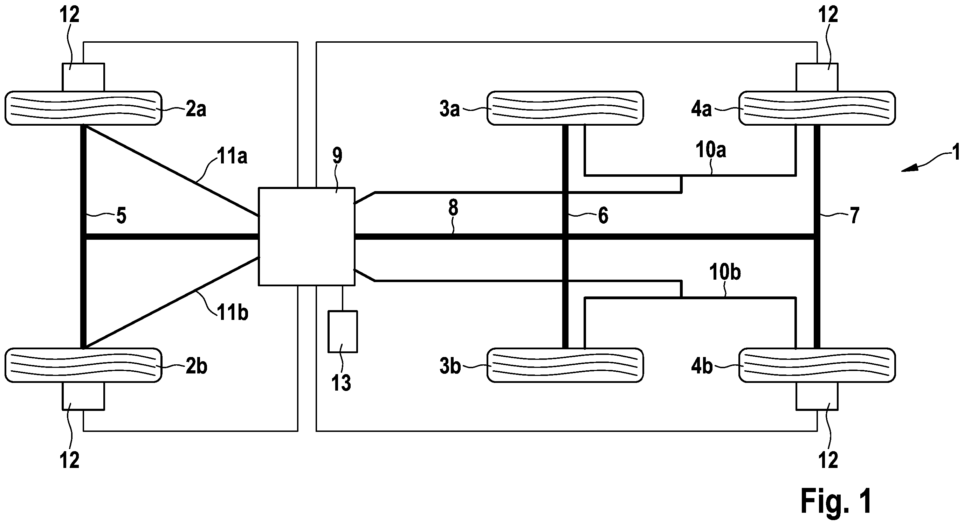

Figur 1 zeigt eine schematische Ansicht eines Fahrzeugs 1 mit einer Vorderachse 5 und zwei Hinterachsen 6, 7. Jede der Achsen hat zwei Räder, die mit 2a, 2b, 3a, 3b und 4a, 4b bezeichnet sind. Sämtliche Achsen 5,6,7 sind angetrieben, wobei die Hinterachsen 6,7 über eine Kardanwelle 8 angetrieben werden.

Bei dem in Figur 1 dargestellten Fahrzeug 1 sind die Räder 2a, 2b der Vorderachse 5 und die Räder 4a, 4b der zweiten Hinterachse 7 mit Rad-Drehzahlsensoren 12 ausgestattet. Die Räder 3a, 3b der ersten Hinterachse 6 umfassen dagegen keine Rad-Drehzahlsensoren 12. Daher ist es nicht möglich, den Radschlupf an diesen Rädern 3a, 3b direkt zu messen.

Befindet sich das Fahrzeug 1 beispielsweise in einer Senke, wobei die erste Hinterachse 6 keine oder nur eine sehr geringe Aufstandskraft hat, drehen die Räder der Achse 6 bei einem Anfahrvorgang durch. Das Fahrzeug 1 kann somit nicht losfahren, obwohl die Vorderachse 5 und die zweite Hinterachse 7 eine ausreichende Bodenhaftung haben.

Mit einer aus dem Stand der Technik bekannten Traktionshilfe-Funktion wäre es nun möglich, die Radbremsen der ersten Hinterachse 6 zu betätigen und somit das Antriebsmoment auf die Räder 2a, 2b; 4a, 4b der anderen Achsen 5, 7 zu verschieben. Wegen der fehlenden Rad-Drehzahlsensoren 12 an den Rädern 3a, 3b der ersten Hinterachse 6 ist es jedoch nicht möglich, den Antriebsschlupf direkt zu erkennen. Um dennoch eine Information über den Radschlupf an den Rädern 3a, 3b zu erhalten, wird hier die Drehzahl der Kardanwelle 8 mittels eines Drehzahlsensors 13 gemessen und ausgewertet. Die Drehzahlinformationen der Rad-Drehzahlsensoren 12 und des Kardanwellen-Sensors 13 wird von einem Steuergerät 9 mit einem Bremsregelalgorithmus eingelesen. Die Kardanwellen-Drehzahl wird dann in Relation zur Drehzahl wenigstens eines anderen Rades 2a, 2b; 4a, 4b gesetzt. Bei einer zu hohen Abweichung zwischen der Kardanwellen-Drehzahl und der gemessenen Rad-Drehzahl wird wenigstens eines der Räder 3a, 3b, die keinen Drehzahlsensor 12 aufweisen, automatisch gebremst. Dadurch wird das Antriebsmoment von den schlupfbehafteten Rädern 3a, 3b auf die anderen Räder 2a, 2b beziehungsweise 4a, 4b übertragen.

Im vorliegenden Ausführungsbeispiel ist für die Räder 3a, 3b; 4a, 4b der Hinterachsen 6, 7 ein gemeinsamer Bremskreis vorgesehen. Die zugehörigen Hydraulikleitungen sind mit 10a, 10b bezeichnet. Bei einem Bremseingriff werden sämtliche Räder 3a, 3b; 4a, 4b der Hinterachsen 6, 7 gemeinsam gebremst, so dass in diesem Fall das Antriebmoment auf die Räder 2a, 2b der Vorderachse 5 übertragen wird. Dies ist jedoch ausreichend, um das Fahrzeug anfahren zu lassen.

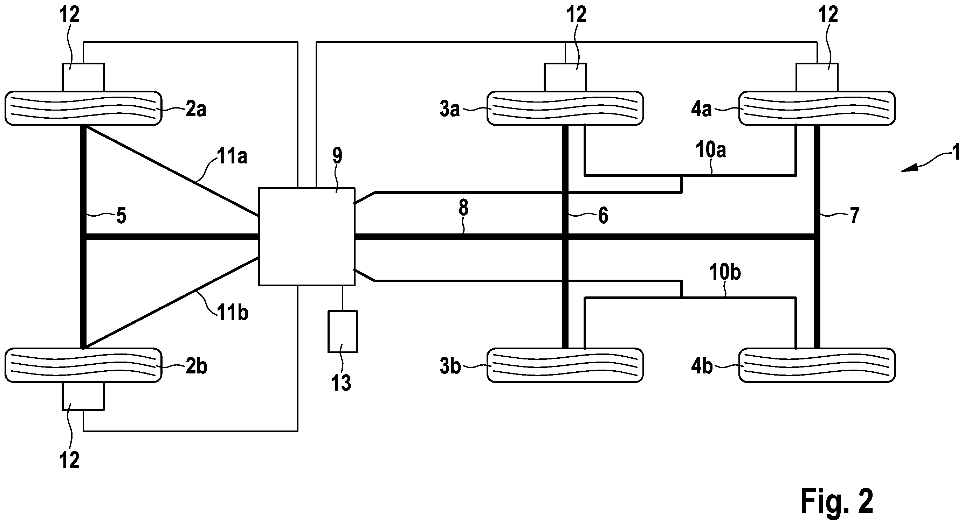

Figur 2 zeigt ein zweites Ausführungsbeispiel eines dreiachsigen Fahrzeugs 1, das im Wesentlichen identisch aufgebaut ist wie das in Figur 1 dargestellte Fahrzeug 1. Im Unterschied zu Figur 1 sind jedoch die Rad-Drehzahlsensoren 12 anders angeordnet. Im vorliegenden Fall umfassen wiederum die Räder 2a, 2b der Vorderachse 5 jeweils einen Rad-Drehzahlsensor 12. Die Hinterachsen 6, 7 umfassen dagegen jeweils nur einen Rad-Drehzahlsensor 12 an den Rädern 3a und 4a. Die Räder 3b, 4b haben keine Rad-Drehzahlsensoren 12, so dass die Rad-Drehzahlen nicht direkt gemessen werden können. Um dennoch eine Information über einen möglicherweise auftretenden Radschlupf an den Rädern 3b, 4b zu erhalten, wird wiederum die Kardanwellen-Drehzahl ausgewertet. Wenn beispielsweise die Drehzahlsensoren 12 der Räder 3a, 4a Werte um Null liefern und die Drehzahl der Kardanwelle 8 relativ gesehen zu hoch ist, muss davon ausgegangen werden, dass zumindest eines der Räder 3b, 4b durchdreht. Mit der dargestellten Drehzahlsensor-Anordnung ist es nicht möglich, genau festzustellen, welches der Räder 3b, 4b Radschlupf aufweist. Bekannt ist allerdings, dass zumindest eines der Räder 3b, 4b Radschlupf aufweist. Es werden daher beide Räder 3b, 4b gebremst und somit das Antriebsmoment auf die Räder 2a, 2b der Vorderachse 5 übertragen, so dass das Fahrzeug anfahren kann.

Gemäß einer alternativen Ausführungsform der Erfindung (nicht gezeigt) könnten die Drehzahlsensoren 12 an den beiden Hinterachsen 6, 7 auch diagonal, zum Beispiel an den Rädern 3a, 4b angeordnet sein. Die Erfindung ist auch auf Fahrzeuge mit mehr als drei angetriebenen Achsen anwendbar.

## Patentansprüche

1. Verfahren zum Übertragen des Antriebsmoments von Rädern (3a, 3b) mit einer geringen Traktion auf Räder (2a, 2b) mit einer höheren Traktion für Fahrzeuge (1) mit mehreren angetriebenen Achsen (5,6,7), bei denen mehrere, aber nicht alle angetriebenen Räder (2a-4a; 2b-4b) mit einem Drehzahlsensor (12) ausgestattet sind,
**dadurch gekennzeichnet, dass**
die Drehzahl einer Kardanwelle (8) gemessen und in Relation zur Rad-Drehzahl wenigstens eines Rades (4a, 4b) mit Drehzahlsensor (12) gesetzt wird, und dass bei einer zu hohen Abweichung zwischen der Kardanwellen-Drehzahl und der Rad-Drehzahl wenigstens ein Rad (3a, 3b) automatisch gebremst wird, das keinen Drehzahlsensor (12) aufweist.

2. Verfahren nach Anspruch 1,
**dadurch gekennzeichnet, dass**
ein Rad (3a, 3b) ohne Drehzahlsensor (12) automatisch gebremst wird, wenn eine gemessene Rad-Drehzahl etwa gleich Null und die Kardanwellen-Drehzahl ungleich Null ist.

3. Verfahren nach Anspruch 1,
**dadurch gekennzeichnet, dass**
ein Rad (3a, 3b) ohne Drehzahlsensor (12) automatisch gebremst wird, wenn eine gemessene Rad-Drehzahl ungleich Null ist, die Kardanwellen-Drehzahl von der Rad-Drehzahl aber zu stark abweicht.

4. Verfahren nach einem der vorhergehenden Ansprüche,
**dadurch gekennzeichnet, dass**
im Falle eines Fahrzeugs (1) mit wenigstens zwei Hinterachsen (6, 7), bei dem die Räder (3a, 3b) einer Hinterachse (6) keine Drehzahlsensoren (12) aufweisen, zumindest die Räder (3a, 3b) der Hinterachse (6) ohne Drehzahlsensoren (12) automatisch gebremst werden.

5. Verfahren nach einem der vorhergehenden Ansprüche,
**dadurch gekennzeichnet, dass**
im Falle eines Fahrzeugs mit wenigstens zwei Hinterachsen (6, 7), bei dem an mehreren Hinterachsen (6,7) zumindest je ein Rad keinen Drehzahlsensor (12) hat, sämtliche Räder (3a, 3b, 4a, 4b) der zugehörigen Hinterachsen (6, 7) gebremst werden, so dass das Antriebsmoment von diesen Rädern (3a, 3b, 4a, 4b) auf die Vorderräder (2a, 2b) übertragen wird.

6. Automatische Traktionshilfe für Kraftfahrzeuge (1) mit mehreren angetriebenen Achsen (5, 6, 7), bei denen mehrere, aber nicht alle angetriebenen Räder (2a-2c; 4a-4c) Rad-Drehzahlsensoren (12) aufweisen, **gekennzeichnet durch**
ein Steuergerät (9), das die Drehzahl einer Kardanwelle (8) auswertet und in Relation zur Rad-Drehzahl wenigstens eines Rades (2a, 2b; 4a, 4b) setzt, und das bei einer zu hohen Abweichung zwischen der Kardanwellen-Drehzahl und der Rad-Drehzahl einen automatischen Bremsvorgang an wenigstens einem Rad (3a, 3b) auslöst, das keinen Drehzahlsensor (12) aufweist.

## Claims

1. Method for transferring the drive torque from wheels (3a, 3b) with low traction to wheels (2a, 2b) with higher traction for vehicles (1) having a plurality of driven axles (5, 6, 7,) in which a plurality, but not all, of the driven wheels (2a-4a; 2b-4b) are equipped with a rotational speed sensor (12),
**characterized in that**
the rotational speed of a cardan shaft (8) is measured and is set in relation to the wheel rotational speed of at least one wheel (4a, 4b) with a rotational speed sensor (12), and **in that** in the event of too high a deviation between the cardan shaft rotational speed and the wheel rotational speed, at least one wheel (3a, 3b) which has no rotational speed sensor (12) is automatically braked.

2. Method according to Claim 1,
**characterized in that**
a wheel (3a, 3b) without rotational speed sensor (12) is automatically braked if a measured wheel rotational speed is approximately equal to zero and the cardan shaft rotational speed is not equal to zero.

3. Method according to Claim 1,
**characterized in that**
a wheel (3a, 3b) without a rotational speed sensor (12) is automatically braked if a measured wheel rotational speed is not equal to zero but the cardan shaft rotational speed deviates too highly from the wheel rotational speed.

4. Method according to one of the preceding claims, **characterized in that**
in the case of a vehicle (1) having at least two rear axles (6, 7) in which the wheels (3a, 3b) of one rear axle (6) have no rotational speed sensors (12), at least the wheels (3a, 3b) of the rear axle (6) without rotational speed sensors (12) are automatically braked.

5. Method according to one of the preceding claims, **characterized in that**
in the case of a vehicle having at least two rear axles (6, 7) in which at least one wheel on each of a plurality of rear axles (6, 7) has no rotational speed sensor (12), all the wheels (3a, 3b, 4a, 4b) of the associated rear axles (6, 7) are braked, so that the drive torque from these wheels (3a, 3b, 4a, 4b) is transferred to the front wheels (2a, 2b).

6. Automatic traction aid for motor vehicles (1) having a plurality of driven axles (5, 6, 7), in which a plurality, but not all, of the driven wheels (2a-2c; 4a-4c) have wheel rotational speed sensors (12),
**characterized by**
a control device (9) which evaluates the rotational speed of a cardan shaft (8) and sets the same in relation to the wheel rotational speed of at least one wheel (2a, 2b; 4a, 4b), and which, in the event of too high a deviation between the cardan shaft rotational speed and the wheel rotational speed, triggers an automatic braking operation on at least one wheel (3a, 3b) which has no rotational speed sensor (12).

## Revendications

1. Procédé pour le transfert du couple d'entraînement de roues (3a, 3b) avec une faible traction à des roues (2a, 2b) avec une plus grande traction pour véhicules (1) avec plusieurs essieux moteurs (5, 6, 7), dans lesquels plusieurs, mais pas la totalité, des roues motrices, (2a-4a ; 2b-4b) sont munies d'un capteur de vitesse de rotation (12), **caractérisé en ce que**
la vitesse de rotation d'un arbre à cardan (8) est mesurée et est mise en rapport avec la vitesse de rotation des roues d'au moins une roue (4a, 4b) avec le capteur de vitesse de rotation (12), et **en ce que** dans le cas d'un écart trop élevé entre la vitesse de rotation de l'arbre à cardan et la vitesse de rotation de la roue, au moins une roue (3a, 3b) qui ne présente pas de capteur de vitesse de rotation (12) est automatiquement freinée.

2. Procédé selon la revendication 1,
**caractérisé en ce que**
une roue (3a, 3b) sans capteur de rotation (12) est automatiquement freinée lorsqu'une vitesse de rotation mesurée de la roue est approximativement égale à zéro et que la vitesse de rotation de l'arbre à cardan est différente de zéro.

3. Procédé selon la revendication 1, **caractérisé en ce que**
une roue (3a, 3b) sans capteur de vitesse de rotation (12) est automatiquement freinée lorsqu'une vitesse de rotation mesurée de la roue est différente de zéro mais que la vitesse de rotation de l'arbre à cardan s'écarte trop de la vitesse de rotation de la roue.

4. Procédé selon l'une quelconque des revendications précédentes,
**caractérisé en ce que**
dans le cas d'un véhicule (1) avec au moins deux essieux arrière (6, 7), dans lequel les roues (3a, 3b) d'un essieu arrière (6) ne présentent pas de capteur de vitesse de rotation (12), au moins les roues (3a, 3b) de l'essieu arrière (6) sans capteur de vitesse de rotation (12) sont automatiquement freinées.

5. Procédé selon l'une quelconque des revendications précédentes,
**caractérisé en ce que**
dans le cas d'un véhicule avec au moins deux essieux arrière (6, 7), dans lequel au niveau de plusieurs essieux arrière (6, 7) au moins à chaque fois une roue ne présente pas de capteur de vitesse de rotation (12), toutes les roues (3a, 3b, 4a, 4b) des essieux arrière associés (6, 7) sont freinées, de telle sorte que le couple d'entraînement de ces roues (3a, 3b, 4a, 4b) soit transmis aux roues avant (2a, 2b).

6. Assistance à la traction automatique pour véhicules automobiles (1) comprenant plusieurs essieux moteurs (5, 6, 7), dans lesquels plusieurs, mais pas la totalité, des roues motrices (2a-2c ; 4a-4c) présentent des capteurs de vitesse de rotation des roues (12), **caractérisée par**
un appareil de commande (9) qui analyse la vitesse de rotation d'un arbre à cardan (8) et qui la met en rapport avec la vitesse de rotation des roues d'au moins une roue (2a, 2b ; 4a, 4b), et qui, dans le cas d'un écart trop élevé entre la vitesse de rotation de l'arbre à cardan et la vitesse de rotation de la roue, déclenche une opération de freinage automatique au niveau d'au moins une roue (3a, 3b) qui ne présente pas de capteur de vitesse de rotation (12).
